# EUROPEAN PATENT APPLICATION

(11) **EP 1 316 921 A1**
(43) Date of publication of application: **04.06.2003**
(21) Application number: 02079858.3
(22) Date of filing: 21.11.2002
(51) Int. Cl.: G06T 15/70

(54) **A method for creating photo-realistic animation that expresses a plurality of expressions**

(30) Priority: 03.12.2001 US 11595
(71) Applicant: EASTMAN KODAK COMPANY, Rochester, New York 14650 (US)
(72) Inventor: Stephany, Thomas Michael, Patent Legal Staff, Rochester, New York 14650-2201 (US); Kerbs, Robert E., Patent Legal Staff, Rochester, New York 14650-2201 (US); Olson, Donald Edward, Patent Legal Staff, Rochester, New York 14650-2201 (US)
(74) Representative: Haile, Helen Cynthia

(57) **Abstract**

A method for creating photo-realistic animation that expresses a plurality of expressions, the method comprises the steps of creating a wire frame; creating a texture model which displays the photo-realistic animation; creating a plurality of instruction sets which directs the wire frame to each express a unique emotion; and storing the plurality of instructions in a database for permitting delivery of a photo-realistic animation showing a plurality of emotion

## Description

The invention relates generally to the field of animations and more particularly to the use of photo-realistic animations to more precisely convey the meaning within a written message, including instant messaging and other textual deliveries. Additionally, it is useful in the field of photo-realistic cartoons or comedy where multiple emotions are required to deliver the full impact of the delivery of a visual message.

The use of emotions to deliver deeper understanding of an audible dialog such as in a speech is well known. The use of inflections and along with hand and facial projections adds great depth to the subject being conveyed. Additionally, the use of emotions by comedians such as George Carlin are key to the delivery of a comedic subject matter. Additionally, a monotonic voice as used by the robot in the television series "Lost in Space" is also known. All forms have been demonstrated as effective tools for the delivery of ideas.

Based on the previous information it can be derived that photo-realistic animations built on wire frames can be much more effective when they can access a range of emotions which render them more effective in imitating the human character. Since these displayed emotions are generally displayed as a single emotion at a time; there is a need, therefore, to provide these photo realistic wire frame animations with the ability to display human emotions in a new way. In addition, there is a further need to deliver additional value to photo-realistic animations through the use of this technique.

The present invention is directed to overcoming one or more of the problems set forth above. Briefly summarized, according to one aspect of the present invention, the invention resides in the method of adding additional value to a photo-realistic animation by building multiple sets of definable human emotions in a computer; referencing the characteristics of those emotions in a database; obtaining a wire mesh and a texture model; and adding the emotional and texture instructions together on a real time basis to create a multi-emotional capable photo-realistic animation.

These and other aspects, objects, features and advantages of the present invention will be more clearly understood and appreciated from a review of the following detailed description of the preferred embodiments and claims, and by reference to the accompanying drawings.

The present invention has the following advantage in that it enables the use of multiple emotion packs with photo-realistic wire frame animations. The photo-realistic digital stand-in serves as a more believable vehicle for use in the replacement of human actors in that multiple human emotions are available to be added real time with the wire frame and texture instructions, thus creating a substantial advantage over traditional animations. This method also creates an additional improvement over the use of video, in that when compared to video, it can be easily manipulated, no acting or actors are required, and the resultant production uses much less storage space than conventional video.
Fig. 1 is a perspective view of a computer system for implementing the present invention;
Fig. 2 is a perspective view of a typical wire mesh of the present invention; and
Fig. 3 is a diagram showing the addition of wire frame texture instructions to emotion packs of the present invention.

In the following description, a portion of the present invention will be described in the preferred embodiment as a software program. Those skilled in the art will readily recognize that the equivalent of such software may also be constructed in hardware.

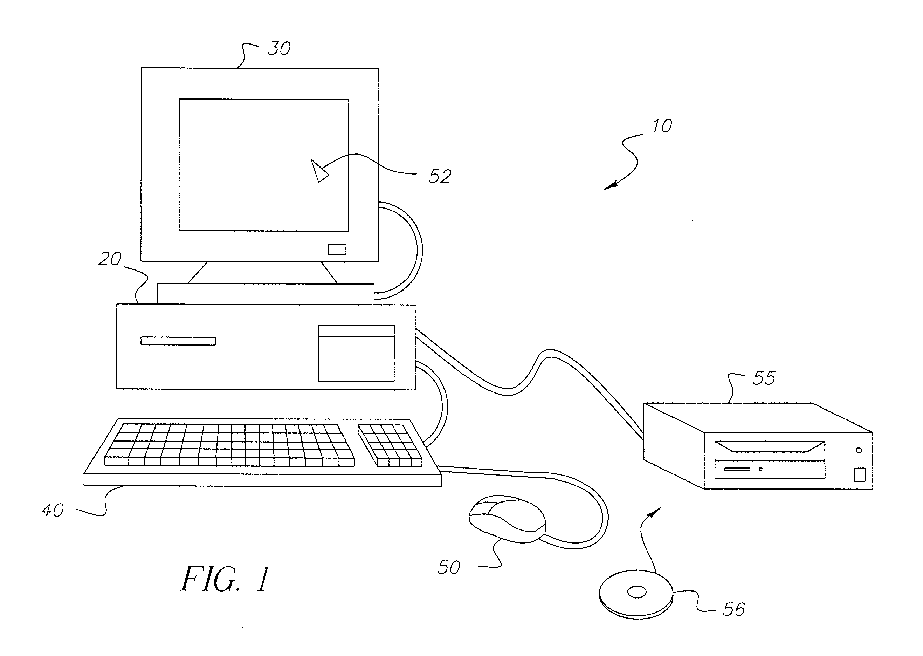

Referring to Fig. 1, there is illustrated a computer system 10 for implementing the present invention. Although the computer system 10 is shown for the purpose of illustrating a preferred embodiment, the present invention is not limited to the computer system 10 shown, but may be used on any electronic processing system. The computer system 10 includes a microprocessor-based unit 20 for receiving and processing software programs and for performing other processing functions. A display 30 is electrically connected to the microprocessor-based unit 20 for the display of user related information associated with the software. A keyboard 40 is also connected to the microprocessor-based unit 20 for permitting a user to input information to the software. As an alternative to using the keyboard 40 for input, a mouse 50 may be used for moving an icon 52 on the display 30 and for selecting an item on which the icon 52 overlays, as is well known in the art.

A compact disk read-only memory (CD-ROM) 55 is connected to the microprocessor-based unit 20 for receiving software programs and for providing means to input software programs and other information to the microprocessor based unit 20 via a compact-disk 56 which typically includes a software program. Still further, the microprocessor-based unit 20 may be programmed. As is well known in the art, for storing the software program internally.

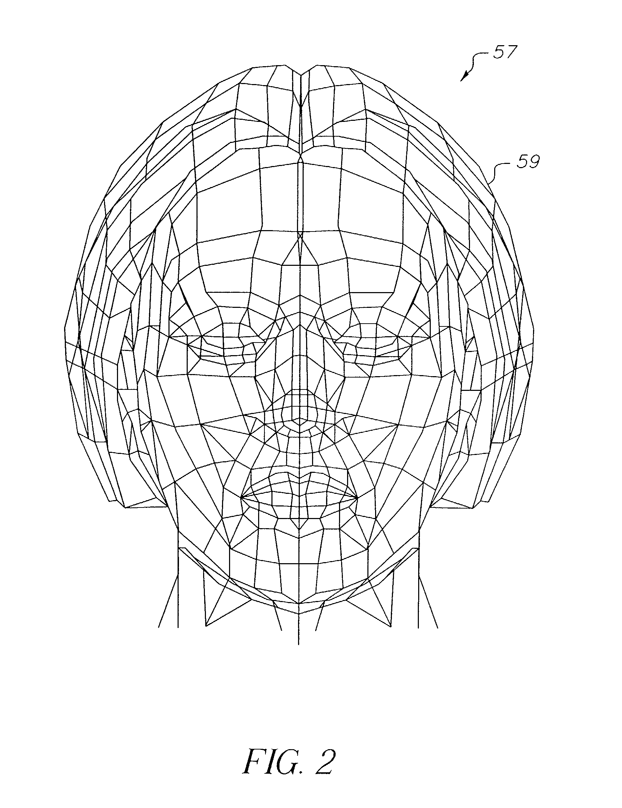

Referring briefly to Fig. 2, there is shown a typical wire mesh 57 used in the present invention and shown for clarity of understanding. The wire mesh 57 includes a plurality of interconnecting segments 59 that forms a model of the exterior shape of the input image.

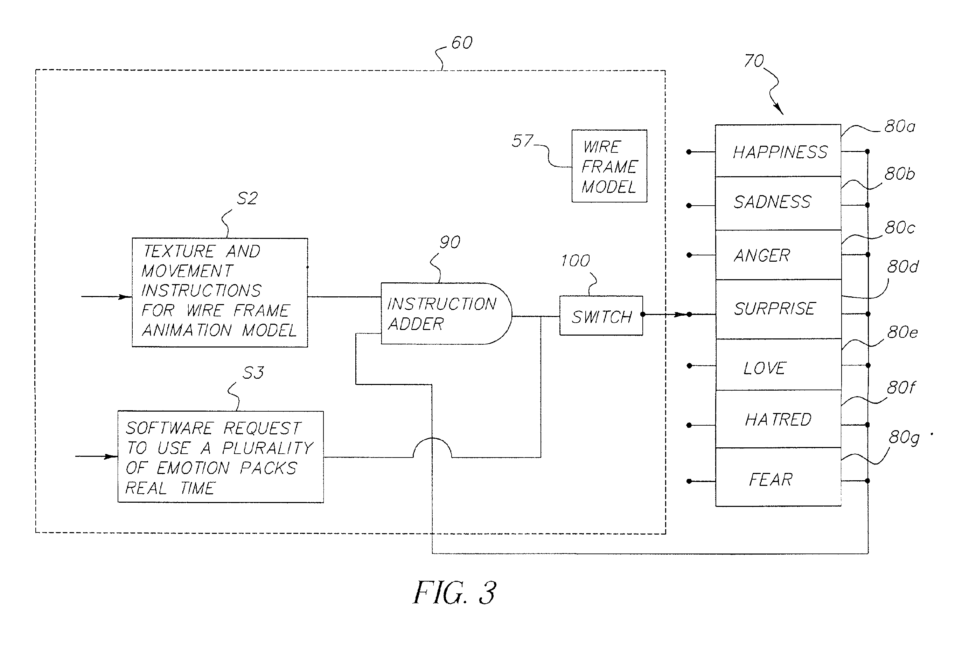

Referring next to Fig. 3, there is shown a diagram of a preferred embodiment for implementation of the present invention. It is instructive to note that there is software 60 being executed on the computer system 10. In this regard, the software requests S3 a real-time request for a plurality of emotions that are to be displayed sequentially as directed by the software 60 in the creation of animation. The software also includes texture and movement instructions S2 which both add texture and movement to the wire frame model 57. These emotion instructions S3 are added to the texture and movement instructions S2 by the instruction adder 90. This adder 90 combines the selected emotions of database 70 with texture and movement instructions S2 as requested by software instructions S3 which are fed to a software switch 100 for selecting the desired emotion pack. The plurality of emotions includes individual emotion packs 80a-80g that is stored in a database 70. The emotion packs 80a-80g are useable in a photo-realistic animation to display various human emotions such as happiness 80a, sadness 80b, anger 80c, surprise 80d, love 80e, hatred 80f, and fear 80g. Still further, these emotion packs may be derived from the emotions of real people, thus giving additional reality to an animation. For example, the happiness of comedian George Carlin is different from the happiness expressed by other unknown comedians such as, Tom Stephany, or a fictitious character.

In an alternative embodiment, the texture and movement instructions S2 may be a plurality of such texture and movement instructions S2 that are stored in a database. These instructions may be retrieved and executed in a manner that produces the likes of emotional morphing.

## Claims

1. A method for creating photo-realistic animation that expresses a plurality of expressions, the method comprising the steps of:
(a) creating a wire frame;
(b) creating a texture model that displays the photo-realistic animation;
(c) creating a plurality of instruction sets which directs the wire frame to each express a unique emotion; and
(d) storing the plurality of instructions in a database for permitting delivery of a photo-realistic animation showing a plurality of emotions.

2. The method as in claim 1 further comprising the step of creating a plurality of texture models and storing the texture models in a database.

3. The method as in claim 1, wherein step (c) includes creating a plurality of sets of instructions having happiness, sadness, anger, surprise, love, hatred, and fear.

4. The method as in claim 1, wherein step (c) includes creating instructions sets that mimic real people, animals or fictitious characters.
